# FASCICULE DE BREVET EUROPEEN

(11) **EP 2 318 170 B1**
(45) Date de publication et mention de la délivrance du brevet: **05.07.2017**
(21) Numéro de dépôt: 09753956.3
(22) Date de dépôt: 29.05.2009
(51) Int. Cl.: B23K 9/04, B23K 9/09

(54) **CONSTRUCTION D'UNE PARTIE D'UNE PIECE METALLIQUE PAR LE PROCEDE MIG AVEC COURANT ET FIL PULSES**
VERFAHREN ZUM AUFTRAGEN TEIL EINES WERKSTÜCKS MITTELS MIG-SCHWEISSEN MIT GEPULSTEN STROM UND DRAHTVORSCHUB
METHOD OF BUILDING UP PART OF A METAL WORKPIECE BY MIG WELDING USING PULSED CURRENT AND WIRE FEED

(30) Priorité: 30.05.2008 FR 0802986
(43) Date de publication de la demande: 11.05.2011
(73) Titulaire: Safran Aircraft Engines, 75015 Paris (FR)
(72) Inventeur: FLESCH, Thierry Jean, Emile, F-77310 Pringy (FR); MOTTIN, Jean-Baptiste, 86000 Poitiers (FR)
(74) Mandataire: Gevers & Orès
(86) Numéro de dépôt international: PCT/EP2009/056620
(87) Numéro de publication internationale: WO 2009/144301

(56) Documents cités:
- FR-A- 2 518 000
- US-A- 6 118 098

## Description

L'invention concerne la construction et le rechargement de pièces métalliques, d'une turbomachine, tels que décrits dans le document US-A-6 118 098. Plus particulièrement, l'invention concerne la création d'un volume discontinu, notamment une bride ou un bossage.

La création d'une discontinuité de volume est actuellement obtenue par les procédés conventionnels tels que la forge, la fonderie ou le soudage de deux pièces. L'inconvénient principal de ces procédés est le coût de production associé, en particulier pour les petites séries ou pour des pièces de géométrie complexe.

Le soudage de type TIG (Tungsten Inert Gas) est un procédé de soudage à l'arc avec une électrode non fusible, sous atmosphère gazeuse. Cette technique s'utilise avec métal d'apport pour la réalisation la construction ou le rechargement de pièces telles que les aubes de turbomachine. Le gaz neutre, généralement à base d'argon ou d'hélium, isole de l'air le métal en fusion, les zones chaudes et l'électrode tungstène, évitant ainsi toute oxydation. Dans une veine de gaz neutre, on fait jaillir un arc électrique entre l'électrode en tungstène, non fusible, et la pièce à souder. La chaleur dégagée par l'arc fait fondre les bords de la pièce et l'éventuel métal d'apport contribuant ainsi à la formation du cordon.

Un objectif de l'invention est de disposer d'une technique pour la construction ou la reconstruction de pièces ou de parties de pièces permettant un apport de matière important par la formation de cordons de section importante. Alors que la technique TIG manuelle connue de l'état de l'art, permet des dépôts de cordons dont la section est au maximum de 10mm², l'objectif est la réalisation de dépôts dont la section du cordon est supérieure notamment de section de plus de 25mm². Il s'agit de ne pas créer ou tout au moins de minimiser les distorsions résiduelles éventuelles de la pièce.

L'objectif est aussi de garantir une bonne santé de la matière dans la zone déposée. L'invention parvient à ces objectifs en mettant en oeuvre un procédé MIG à courant et fil pulsés.

Un procédé MIG à courant et fil pulsés, tel que celui connu pour le soudage sous l'acronyme CMT (Cold Metal Transfer) et décrit dans les demandes de brevet WO2006125234, WO2006089322 ou WO2005042199, reprend le principe du procédé MIG avec courant pulsé et y ajoute notamment une gestion fine du déroulement du fil. Le fil est déroulé de façon continue jusqu'à l'apparition d'un court circuit qui se produit quand le fil entre en contact avec la pièce. A cet instant, le fil est retiré, permettant à la goutte de métal de se déposer. Puis le processus reprend. Ce cycle se reproduit à une fréquence pouvant atteindre 70 Hz. L'apport d'énergie est donc limité tout en garantissant, grâce à un pilotage par ordinateur, une grande qualité métallurgique. En outre, le soudage se fait pratiquement sans projection. Le soudage MIG à courant et fil pulsés offre des avantages par rapport au soudage MIG en courant continu et ce, pour les raisons suivantes : apport calorifique plus faible, utilisation possible de diamètres de fil plus grand, pratiquement pas de projection et pénétration régulière.

Conformément à l'invention, on met en oeuvre un procédé de construction d'au moins une partie de largeur déterminée d'une pièce métallique d'une turbomachine, caractérisé par le fait qu'on construit ladite partie par apport de métal avec un appareillage de soudage MIG comportant un générateur de courant pulsé et un débit de fil d'apport pulsé avec lequel on fait varier le courant et le débit, la construction étant opérée sous forme de cordons de métal en plusieurs couches successives.

Alors que la technique MIG à courant et fil puisés était connue pour le soudage des pièces entre elles, on a constaté, grâce à l'invention, que convenablement pilotée, elle ouvrait ainsi la possibilité de construire des parties de pièces grâce à un taux de dépôt important sous la forme de cordons de section importante. Elle engendre de faibles déformations tout en gardant une qualité métallurgique comparable à celle obtenue par la technique TIG.

Conformément à un premier mode de réalisation, sur une première couche A , on réalise un premier cordon suivant un premier axe principal et d'une première largeur déterminée, on réalise ensuite un second cordon suivant un second axe principal et d'une seconde largeur déterminée, en respectant un recouvrement sur le premier cordon, ledit recouvrement variant de ¼ à ½ de la largeur du premier cordon, on réalise le nombre de cordons nécessaire pour que la surface couverte par les cordons soit supérieure à la largeur L de ladite partie; sur une deuxième couche B, on réalise un premier cordon en centrant son axe sur l'intersection des deux premiers cordons de la première couche A, on réalise un deuxième cordon en respectant un recouvrement sur le premier cordon de ladite deuxième couche, ledit recouvrement variant de ¼ à ½ de la largeur du premier cordon, on réalise le nombre de cordons nécessaire pour que la surface couverte par les cordons soit supérieure à la largeur L de ladite partie; on construit un nombre de couches suffisant de manière à obtenir la hauteur souhaitée de ladite partie de pièce.

Conformément à une variante de procédé de construction, sur une première couche A, on réalise un premier cordon suivant une premier axe principal et d'une première largeur déterminée, on réalise ensuite un second cordon, suivant un second axe principal et d'une seconde largeur déterminée, en respectant un recouvrement sur le première cordon, ledit recouvrement variant de 0 à ¼ de la largeur du premier cordon, on réalise le nombre de cordons nécessaire tel que la surface couverte par les cordons soit supérieure à la largeur de ladite partie, sur la deuxième couche on réalise un premier cordon en centrant son axe sur l'axe du premier cordon de la première couche; en outre on réalise une troisième couche, avec un premier cordon réalisé en centrant son axe sur l'intersection des deux premiers cordons de la deuxième couche B; on réalise le nombre nécessaire de cordon en respectant la règle de positionnement de l'axe du cordon., on répète les opérations de manière à obtenir la hauteur souhaitée de ladite partie de pièce.

Le procédé de construction de l'invention est particulièrement adapté aux pièces dont l'épaisseur est supérieure ou égale à 3mm.

Un avantage de l'application du procédé MIG à courant et fil pulsés est qu'à pénétration et vitesse égales, l'énergie moyenne de soudage est plus faible qu'avec un procédé TIG, d'où ses applications au soudage de produits minces. De plus, l'apport d'énergie plus faible réduit la chaleur transmise à la plaque, ce qui limite les déformations.

Selon l'invention, les matériaux des pièces concernées sont les aciers inoxydables, les alliages à base nickel, cobalt ou les alliages de titane.

On comprendra mieux les buts, aspects, et avantages de la présente invention, avec la description donnée, ci-après, des différents modes de réalisation. Ceux ci sont présentés à titre d'exemples, non limitatifs. Les dessins annexés sont décrits ci-dessous :
- La figure 1 représente schématiquement la construction/rechargement d'une bride ou d'un bossage.
- La figure 2 représente la construction du premier cordon d'un bossage.
- La figure 3 montre une stratégie de construction par couche.
- La figure 4 montre une stratégie de construction par superposition de cordons.

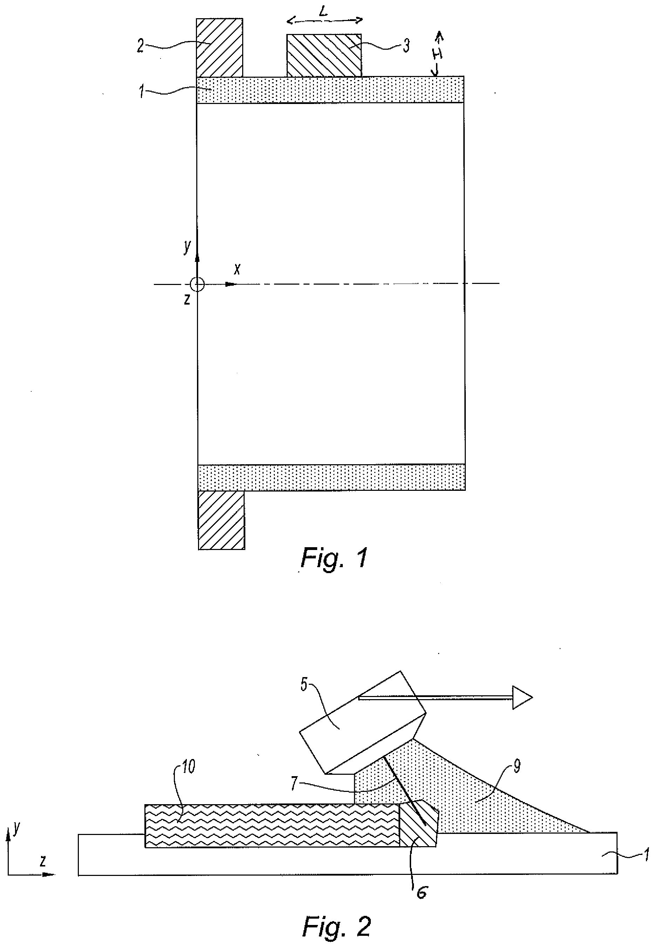

La figure 1 représente une pièce de base 1 de forme cylindrique et d'épaisseur au moins égale à 3 mm, sur laquelle on souhaite réaliser une bride 2 ou bien un bossage 3. La bride 2 se présente sous la forme d'une partie annulaire, ici en extrémité de la pièce cylindrique; elle est réalisée sur tout le pourtour de la pièce 1 avec une hauteur H1 et une largeur L1 déterminées.

Les matériaux concernés par le procédé de l'invention sont les aciers inoxydables tel que celui de formule X5CrNiCu17.4 ou bien W11CrNiMoV12, les alliages à base Nickel tel que celui de formule NiCr19Fe19Nb5Mo3 à base Cobalt tel que celui de formule CoCrNi22W les alliages de Titane tel que celui de formule TiAl6V.

Le bossage 3 est réalisé sur une partie de la surface de la pièce métallique. Sa hauteur H2 et sa largeur L2 sont également prédéterminées.

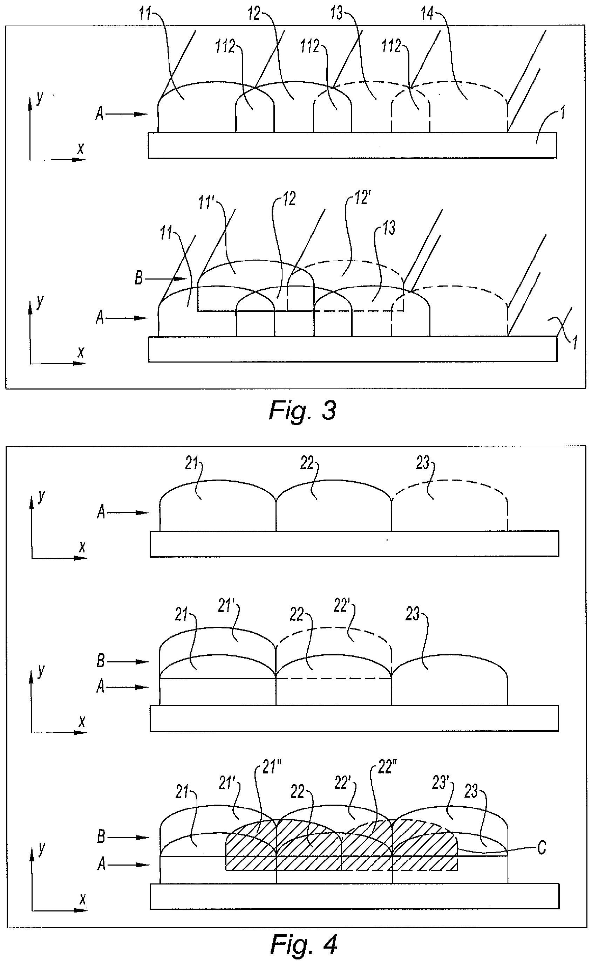

Pour la construction de la bride, ou du bossage, on peut appliquer l'une des stratégies développées dans le procédé de construction de la figure 3 ou de la figure 4.

Sur la figure 2, on présente le dépôt d'un cordon de soudure 10 sur la pièce 1 pour former le bossage ou la bride. Pour cela, conformément à l'invention on utilise une machine de soudage MIG avec fil et courant pulsés comprenant un générateur de courant commandé par microprocesseur par exemple (non représenté sur la figure).

A titre d'exemple, des paramètres applicables à la machine de MIG pulsée proposée par la société Fronius et permettant d'obtenir l'invention sont pour l'inconel la courbe référence CrNi 19-9 et pour le titane CuSi 3 Ø1. La société Fronius met à la disposition de ses clients des ensembles de paramètres préétablis permettant d'adapter l'invention à chaque matériau.

On aperçoit l'extrémité distale de la tête de soudage avec le fil constituant le métal d'apport 7, entouré d'une buse 5. Le métal d'apport et le bain de fusion sont entourés d'un flux de gaz de protection 9, composé d'hélium et/ou d'argon. La buse 5 est entraînée dans le sens de construction du cordon 10. La longueur et la largeur des cordons sont définies en fonction du débit du fil. Le fil tient un rôle prépondérant dans la formation de l'arc électrique, en effet, plus le diamètre du fil est grand, plus le taux de dépôt et la profondeur de pénétration décroitront, plus la largeur du cordon augmentera et plus l'énergie nécessaire à la fusion sera élevée. L'ensemble est connecté à un automate programmable, ce dernier commandant tous les paramètres ayant une influence sur la soudure, permettant ainsi d'avoir un processus stable en gardant la cohérence entre les paramètres tels que le diamètre du fil, le type du fil ou bien le type de gaz de protection.

Selon l'état de l'art, les techniques de construction de pièces mettent en oeuvre des procédés comme le TIG, ou le rechargement laser (poudre entraînée dans un faisceau laser) dont la vitesse de dépôt est faible. La section du cordon reste inférieure à 10 mm² engendrant des déformations importantes de la pièce. Le procédé de construction par MIG avec courant et fil pulsés permet ainsi de multiplier par au moins 2, 5 les sections de cordon et de diminuer les déformations subies par la pièce Les techniques de réalisation des cordons permet de minimiser encore les déformations.

La figure 3 montre une stratégie de construction par couches. La première phase de cette stratégie commence par le nettoyage et le dégraissage de la pièce 1. Pour la réalisation de la première couche A, on dépose la matière en cordons successifs parallèles entre eux. Le gaz de protection est par exemple appliqué sur la face de la pièce en cours de construction avec optionnellement une application sur la face opposée.

Les cordons sont déposés de la façon suivante. On dépose un premier cordon 11 suivant un premier axe principal et d'une première largeur déterminée puis un deuxième 12 suivant un second axe principal et d'une seconde largeur déterminée en respectant un recouvrement 112 sur le premier cordon 11. Ce recouvrement peut varier de ¼ à ½ de la largeur du premier cordon. On réalise autant de cordons 13, 14 etc.... que nécessaire tout en respectant la règle de recouvrement. La surface couverte par l'ensemble des cordons est supérieure, aussi bien en largeur L qu'en longueur, à la surface de la partie de la pièce souhaitée. Pour la réalisation des cordons, la buse est déplacée toujours dans la même direction. Le déplacement peut aussi être effectué dans des directions alternées.

On monte ensuite une deuxième couche B sur la première. Le premier cordon 11' de cette deuxième couche est formé parallèlement aux cordons de la première couche tout en étant centré sur la zone de recouvrement 112 de deux premiers cordons 11, 12 de la couche précédente A. Ensuite, on réalise le deuxième cordon 12' comme les précédents en respectant un recouvrement sur le premier, ce recouvrement variant de ¼ à ½ de la largeur du cordon. On réalise autant de cordons que nécessaire tout en respectant la règle du recouvrement. Comme pour la couche A, la surface couverte par les cordons est supérieure à la surface de la partie de la pièce souhaitée.

Pour obtenir la hauteur souhaitée, pour le bossage ou la bride, les phases décrites ci-dessus sont réitérées autant de fois que nécessaire. De préférence, pour la réalisation des cordons de la deuxième couche, la buse est déplacée dans la direction opposée à celle de la réalisation de la première couche.

La figure 4 montre une variante de stratégie de construction par superposition de cordons.

La première phase commence par le nettoyage et le dégraissage de la pièce comme précédemment.

Pour la réalisation de la première couche A, on dépose un premier cordon 21 suivant un premier axe principal et d'une première largeur déterminée, puis un deuxième cordon 22 suivant un second axe principal et d'une seconde largeur déterminée, en respectant un recouvrement sur le premier cordon plus faible que dans le cas précédent; le recouvrement varie de 0 à ¼ de la largeur du cordon. On réalise le nombre souhaité de cordons 21, 22, 23... en respectant la règle du recouvrement, afin que la surface couverte par les cordons soit supérieure à la surface de la partie de pièce finale. Pour la réalisation des cordons de cette phase, la buse se déplace dans la même direction.

Pour la deuxième couche B le premier cordon 21' est déposé parallèlement aux autres cordons. Son axe est centré sur l'axe du premier cordon 11 réalisé sur la couche précédente A. Ensuite, on dépose le second cordon 22' de la deuxième couche en respectant le faible recouvrement décrit dans la phase précédente. On réalise le nombre de cordons souhaité, tout en respectant la règle de recouvrement faible. La surface couverte par les cordons est supérieure à la surface de la partie souhaitée. Pour la réalisation des cordons de cette deuxième phase, la buse a un sens de déplacement opposé à celui qu'elle avait lors de la réalisation de la couche précédente.

La troisième phase de cette stratégie consiste en la réalisation d'une couche C d'homogénéisation. Pour ce faire, on réalise un premier cordon 21" parallèlement aux cordons précédents en centrant son axe à l'intersection des cordons 21' et 22' de la couche précédente B. comme on le voit sur la figure ce cordon 22" est réalisé de façon à venir homogénéiser la matière entre les cordons adjacents des deux couches A et B sous-jacentes.

On réalise le second cordon 22" en centrant son axe sur l'intersection des cordons 22' et 23' de la couche sous-jacente B. On réalise autant de cordons que nécessaire, afin que la surface couverte soit supérieure à celle de la partie de la pièce souhaitée, tout en respectant la règle de positionnement de l'axe des cordons. La buse de préférence est déplacée dans la direction opposée à celle de la couche précédente. Pour obtenir la hauteur souhaitée, pour le bossage ou la bride, les phases décrites ci-dessus doivent être réitérées autant de fois que cela est nécessaire.

## Revendications

1. Procédé de construction d'au moins une partie de largeur L et de hauteur H d'une pièce métallique d'une turbomachine, la construction étant opérée sous forme de cordons (10) de métal en plusieurs couches successives, **caractérisé par le fait qu'**on construit ladite partie par apport de métal avec un appareillage de soudage MIG comportant un générateur de courant pulsé et un débit de fil d'apport pulsé avec lequel on fait varier le courant et le débit.

2. Procédé selon la revendication 1 selon lequel sur une première couche A, on réalise un premier cordon (11) suivant un premier axe principal et d'une première largeur déterminée, on réalise ensuite un second cordon (12), suivant un second axe principal et d'une seconde largeur déterminée, en respectant un recouvrement (112) sur le premier cordon (11), ledit recouvrement variant de ¼ à ½ de la largeur du premier cordon, on réalise le nombre de cordons nécessaire pour que la surface couverte par les cordons soit supérieure à la largeur L de ladite partie, sur une deuxième couche B, on réalise un premier cordon (11') en centrant son axe sur l'intersection des deux premiers cordons (11, 12) de la première couche A, on réalise un deuxième cordon (12') en respectant un recouvrement sur le premier cordon (11'), ledit recouvrement variant de ¼ à ½ de la largeur du premier cordon (11'), on réalise le nombre de cordons nécessaire pour que la surface couverte par les cordons soit supérieure à la largeur L de ladite partie; on construit un nombre de couches de manière à obtenir la hauteur H souhaitée de ladite partie de pièce.

3. Procédé de construction selon la revendication 1, selon lequel sur une première couche A , on réalise un premier cordon (21) suivant un premier axe principal et d'une première largeur déterminée, on réalise ensuite un second cordon (22), suivant un second axe principal et d'une seconde largeur déterminée, en respectant un recouvrement sur le premier cordon (21), ledit recouvrement variant de 0 à ¼ de la largeur du premier cordon, on réalise le nombre de cordons nécessaire tel que la surface couverte par les cordons soit supérieure à la largeur de ladite partie, sur la deuxième couche B on réalise un premier cordon (21') en centrant son axe sur l'axe du premier cordon (21), en outre on réalise une troisième couche C, avec un premier cordon (21") réalisé en centrant son axe sur l'intersection des deux premiers cordons (21',22') de la second couche B, on réalise le nombre nécessaire de cordon en respectant la règle de positionnement de l'axe du cordon., on répète les opérations de manière à obtenir la hauteur souhaitée de ladite partie de pièce.

4. Procédé de construction d'au moins une partie de pièce selon l'une des revendications précédentes, dont l'épaisseur de la pièce est supérieure ou égale à 3mm.

5. Procédé selon l'une des revendications précédentes, **caractérisé en ce que** les matériaux des pièces concernées sont les aciers inoxydables, les bases nickels, les bases cobalts et les alliages de titanes.

6. Procédé de construction et de rechargement de pièce selon la revendication 1, dont le gaz de protection est un mélange constitué d'hélium et d'argon.

## Patentansprüche

1. Verfahren zum Konstruieren von mindestens einem Teil der Breite L und der Höhe H eines metallischen Werkstücks eines Turbinentriebwerks,
wobei das Konstruieren in Form von Metallsträngen (10) in mehreren aufeinanderfolgenden Schichten durchgeführt wird,
**dadurch gekennzeichnet, dass** der Teil durch Auftragen von Metall mit einer MIG-Schweißanlage konstruiert wird, die einen Pulsgenerator und einen Durchsatz des Schweißdrahtes im Puls-Modus aufweist, mit dem der Strom und der Durchsatz variiert werden können.

2. Verfahren nach Anspruch 1, wobei auf einer ersten Schicht A ein erster Strang (11) entlang einer ersten Hauptachse und von einer ersten vorbestimmten Breite erstellt wird und dann ein zweiter Strang (12) entlang einer zweiten Hauptachse und von einer zweiten vorbestimmten Breite unter Einhaltung einer Abdeckung (112) auf dem ersten Strang (11) erstellt wird, wobei die Abdeckung von ¼ bis ½ der Breite des ersten Strangs variiert, die Anzahl an Strängen erstellt wird, die notwendig ist, damit die Fläche, die von den Strängen bedeckt wird, größer als die Breite L des Teils ist, auf einer zweiten Schicht B ein erster Strang (11') erstellt wird, indem seine Achse auf dem Schnittpunkt der zwei ersten Stränge (11, 12) der ersten Schicht A zentriert wird, ein zweiter Strang (12') unter Einhaltung einer Abdeckung auf dem ersten Strang (11') erstellt wird, wobei die Abdeckung von ¼ bis ½ der Breite des ersten Strangs (11') variiert, die Anzahl an Strängen erstellt wird, die notwendig ist, damit die Fläche, die von den Strängen bedeckt wird, größer als die Breite L des Teils ist; eine Anzahl an Schichten derart konstruiert wird, um die gewünschte Höhe H des Teils des Werkstücks zu erhalten.

3. Verfahren zum Konstruieren nach Anspruch 1, wobei auf einer ersten Schicht A ein erster Strang (21) entlang einer ersten Hauptachse und von einer ersten vorbestimmten Breite erstellt wird und dann ein zweiter Strang (22) entlang einer zweiten Hauptachse und von einer zweiten vorbestimmten Breite unter Einhaltung einer Abdeckung auf dem ersten Strang (21) erstellt wird, wobei die Abdeckung von 0 bis ¼ der Breite des ersten Strangs variiert, die Anzahl an Strängen erstellt wird, die notwendig ist, damit die Fläche, die von den Strängen bedeckt wird, größer als die Breite des Teils ist, auf der zweiten Schicht B ein erster Strang (21') erstellt wird, indem seine Achse auf der Achse des ersten Strangs (21) zentriert wird, ferner eine dritte Schicht C mit einem ersten Strang (21") erstellt wird, der erstellt wird, indem seine Achse auf dem Schnittpunkt der zwei ersten Stränge (21', 22') der zweiten Schicht B zentriert wird, die notwendige Anzahl an Strängen erstellt wird, indem die Positionierungsregel der Achse des Strangs eingehalten wird, die Operationen derart wiederholt werden, um die gewünschte Höhe des Teils des Werkstücks zu erhalten.

4. Verfahren zum Konstruieren von mindestens einem Teil eines Werkstücks nach einem der vorhergehenden Ansprüche, wobei die Dicke des Werkstücks größer als oder gleich 3 mm ist.

5. Verfahren nach einem der vorhergehenden Ansprüche, **dadurch gekennzeichnet, dass** die Materialien der betreffenden Werkstücke rostfreie Stähle, Nickelbasislegierungen, Kobaltbasislegierungen und Titanlegierungen sind.

6. Verfahren zum Konstruieren und Aufschweißen eines Werkstücks nach Anspruch 1, dessen Schutzgas eine Mischung ist, die aus Helium und Argon besteht.

## Claims

1. Method of manufacture of at least one portion of width L and height H of a metal part of a turbine engine, the manufacture being carried out in the form of metal beads (10) in several successive layers, **characterised by** the fact that said portion is manufactured by adding metal using MIG welding apparatus comprising a pulsed current generator and a pulsed filler-wire feed rate with which the current and feed rate are varied.

2. Method according to claim 1 wherein on a first layer A, a first bead (11) is produced along a first main axis and with a determined first width, a second bead (12) is then produced, along a second main axis and with a second determined width, while ensuring an overlap (112) on the first bead (11), said overlap varying from ¼ to ½ of the width of the first bead, the number of beads necessary for the surface covered by the beads to be greater than the width L of said portion are produced, and on a second layer B, a first bead (11') is produced while centring its axis on the intersection of the two first beads (11, 12) of the first layer A, a second bead (12') is produced while ensuring an overlap on the first bead (11'), said overlap varying from ¼ to ½ of the width of the first bead (11'), and the number of beads necessary for the surface covered by the beads to be greater than the width L of said part; a number of layers are manufactured so as to obtain the required height H of said portion of the part.

3. Method according to claim 1, wherein on a first layer A, a first bead (21) is produced along a first main axis and with a determined first width, a second bead (22) is then produced, along a second main axis and with a second determined width, while ensuring an overlap on the first bead (21), said overlap varying from 0 to % of the width of the first bead, the number of beads necessary for the surface covered by the beads to be greater than the width of said portion are produced, and on a second layer B, a first bead (21') is produced while centring its axis on the axis of the first bead (21), moreover a third layer C is produced, with a first bead (21") produced by centring its axis on the intersection of the first two beads (21', 22') of the second layer B, and the number of beads necessary is produced while complying with the positioning rule of the axis of the bead, the operations are repeated so as to obtain the required height of said portion of the part.

4. Method of manufacturing at least one portion of a part according to any one of the previous claims, wherein the thickness of the part is greater than or equal to 3mm.

5. Method according to any one of the previous claims, **characterised in that** the materials of the parts concerned are stainless steels, nickel bases, cobalt bases and titanium alloys.

6. Method of manufacture and refilling the part according to claim 1, wherein the protective gas is a mixture comprised of helium and argon.
